# EUROPEAN PATENT APPLICATION

(11) **EP 3 260 614 A1**
(43) Date of publication of application: **27.12.2017**
(21) Application number: 16175363.7
(22) Date of filing: 20.06.2016
(51) Int. Cl.: E03F 7/04, E03F 7/02, F16K 1/18, F16K 1/20, F16K 15/03

(54) **A SEWER VALVE**

(71) Applicant: Sjorstechniek B.V., 1353 LV Almere (NL)
(72) Inventor: TOETER, George, 1353 LV Almere (NL)
(74) Representative: Plaggenborg, Menko Bernard

(57) **Abstract**

The present application relates to a valve (1) with a valve plate (3) for closing off an entrance to a sewer pipe in a storm drain, comprising a connection plate (2) for positioning the valve against a storm drain's wall and a hinge connection (4) for mutually coupling the said valve plate (3) and the connection plate (2). The connection plate (2) being provided with a protruding cover plate (11), said cover plate (11) at least partially overlapping a gap (7) between the valve plate (3) and the connection plate (2).

Furthermore, the present application is directed to a storm drain comprising such a valve.

## Description

The present invention relates to a sewer valve in accordance with the preamble of claim 1.

It is known in the art to close off a sewer pipe in a storm drain by means of a valve. Such valve is hingedly connected to a wall of the storm drain so as to automatically open when a pressure in the sewer pipe is higher than a pressure in the storm drain but is closed most of the times so as to prevent debris entering the sewer pipe. However, a small entrance from the storm drain to the sewer pipe is left at a bottom side of the valve, even if the valve is closed, such that water may flow from the storm drain into the sewer pipe. Flooding of the storm drain therefore is efficiently prevented.

Such known valve provides the advantage that problems due to pressure differences are prevented. However, due to the fact that a rotating movement of the valve around a hinge, provided at a top side of the valve, is required, all of these valves are open at a position near said hinge. Because the opening is at a position above water level, odors from the sewer will flow through said opening, providing nuisance and inconvenience to the surroundings.

There is no solution available in the art for eliminating this disadvantage.

The invention aims at providing an improved valve of a storm drain of the kind mentioned in the preamble.

The invention further aims at providing an improved connection system for connecting a valve to a wall of a storm drain.

So as to obtain at least one of the above mentioned aims, the invention provides a valve as mentioned in claim 1. This valve has the advantage that no odors will escape from the sewer pipe into the storm drain and, as a consequence, into the surroundings.

It has also shown that the valve according to the present invention provides the advantage that the valve is subject to much less failures, and even may be completely free from any failure. The reason for this improved effect is that no gap is present between the top side of the valve at the side of the storm drain's wall. According to the state of the art, branches and the like could get stuck in the gap, interfering with the valve's functioning. The cover efficiently prevents such failures since no gap is present in the valve according to the present invention. Such synergistic effect is a surprising and advantageous effect.

The invention therefore relates to a valve with a valve plate for closing off an entrance to a sewer pipe in a storm drain, comprising a connection plate for positioning the valve against a storm drain's wall and a hinge connection for mutually coupling the said valve and the connection plate, characterized in that the connection plate is provided with a protruding cover plate, said cover plate at least partially overlapping a gap between the valve plate and the connection plate. Such valve provides the goals mentioned above.

According to a preferred embodiment, the cover plate has a partially annular shape, a cylinder axis of said partially annular shaped cover plate being positioned substantially coaxially with a hinge axis of said hinge connecting the valve plate and the connection plate. Such provides the advantage that the cover plate may have a shape that resembles the shape of the hinge, such that a continuous surface is obtained. Thus there is even less chance that debris gets stuck somewhere at the valve.

Furthermore, in this respect it is preferred that a cylinder axis of said hinge connection is directed in an axial direction and wherein said valve has a width extending in said axial direction, said cover plate extending over substantially the complete width of said valve. The advantage as mentioned above, regarding a smaller chance that debris gets stuck is even greater in this embodiment.

A simple and very effective embodiment is obtained when said hinge connection is comprised of two separate hinge parts, each positioned near an end portion of the valve plate in a width direction thereof, and wherein said cover plate is positioned substantially in between said hinge parts, providing an even force distribution along the valve plate and the hinge connection.

An easy protection, i.e. covering, of the gap between the valve plate and the connection plate is obtained if said valve plate is rotatably coupled by means of said hinge connection to said connection plate, wherein said valve plate is positionable from a first position substantially as an extension of said connection plate to a second position substantially parallel with said cover plate. The cover then covers the gap in all positions of the valve plate.

It is especially preferred for the valve plate, in the second position, to substantially abut said connection plate, since such provides a compact embodiment of the valve. The valve plate may also abut the cover plate, but an embodiment wherein the valve plate only abuts the connection plate is preferred for in that case a more stable position of the valve plate is obtained.

According to another aspect, the present invention relates to a storm drain comprising a valve according to the invention and as described above, said storm drain comprising a wall with an entrance to a sewer pipe, said wall extending from a bottom side to a top side of said storm drain, said storm drain comprising a valve plate for closing off said entrance to the sewer pipe, said valve comprising a connection plate for positioning the valve against the storm drain's wall and a hinge connection for mutually coupling the said valve plate and the connection plate. The storm drain according to the invention is characterized in that the connection plate is provided with a protruding cover plate, said cover plate at least partially overlapping a gap between the valve plate and the connection plate. Such storm drain provides the advantages as described with respect to the valve according to the invention in its most basic embodiment.

The storm drain according to the invention is preferably embodied such that the valve plate is rotatably coupled by means of the hinge connection to said connection plate, wherein: - said valve plate is positionable from a first position substantially as an extension of said connection plate to a second position substantially parallel with said cover plate, and - wherein said valve plate as seen from the hinge part is directing towards the bottom side in said first position and to the top side in said second position.

In an embodiment wherein said valve plate is lockable in said second position by means of mutually cooperating locking elements provided on said valve plate and said connection plate, a very stable positioning of the valve plate in the second position is obtained, such that cleaning of the storm drain can be performed very easily, whereas an unobstructed functioning of the valve in the first position is obtained, allowing debris to flow into the bottom part of the storm drain. Cleaning the storm drain, for removing debris from the bottom part, is thereby greatly simplified since on the one hand no debris gets stuck in the gap, which would have the consequence that the valve plate cannot be opened for cleaning the storm drain, and on the other hand cleaning is simplified since the valve plate remains opened is desired.

In certain circumstances it may be preferred that the valve plate abuts the cover plate in the second position. Such might be the case where the storm drain's wall is odd shaped such that the valve plate cannot be positioned in its second position against the wall.

Hereafter, the invention will be further described by means of a drawing. The drawing shows in:
Fig. 1 a valve according to the state of the art,
Fig. 2 an explosion view of the valve according to Fig. 1,
Fig. 3 a valve according to the invention in a first embodiment,
Fig. 4 a valve according to the invention in a second embodiment,
Fig. 5 a valve according to the invention in a third embodiment,
Fig. 6 a sectional view of the valve according to Fig. 3,
Fig. 7 a sectional view of the valve according to Fig. 4,
Fig. 8 and Fig. 9 show two alternative embodiments of the valve according to the present invention, and
Fig. 10 shows an alternative embodiment of the invention.

The same and similar parts and features have been denoted by the same reference numerals in the figures. However, for ease of understanding the figures, not all parts that are required for a practical embodiment have been shown in the figures.

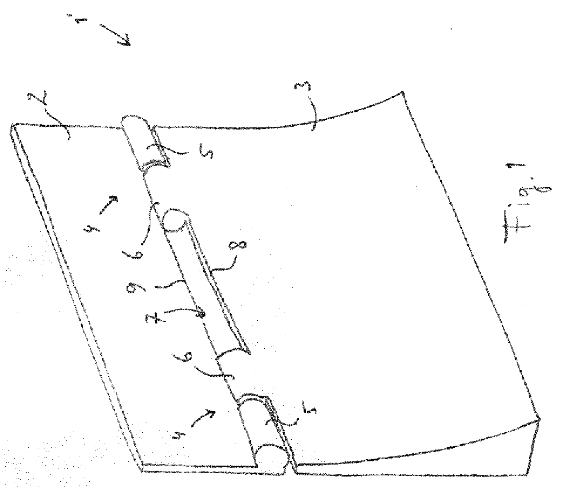

Fig. 1 shows a valve 1' according to the state of the art. The valve 1' is comprised of a connection plate 2 for connecting the valve 1' to a wall of a storm drain (not shown in the Figure) and a valve plate 3 for closing off an entrance to a sewer pipe (not shown in the Figure). The valve 1' comprises a hinge construction 4 such that the valve plate 3 may rotate with respect to the connection plate 2. The hinge construction 4 is comprised of a first hinge part 5, provided at the connection plate 2, and a mutually cooperating second hinge part 6, provided at the valve plate 3.

As can be derived from Fig. 1, a large gap 7 is present between a top part 8 of the valve plate 3 and a bottom part 9 of the connection plate 2. As a consequence, debris may get stuck in this gap 7.

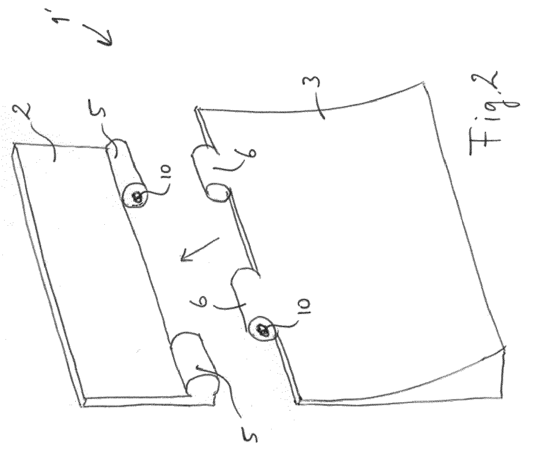

Fig. 2 shows an explosion view of the valve of Fig. 1 in accordance with the state of the art. The hinge parts 5, 6 are mutually coupled through axle elements 10, schematically shown in Fig. 2. The axle elements 10 indicate the position of a rotation axis for rotating the connection plate 2 and the valve plate 3 with respect to each other.

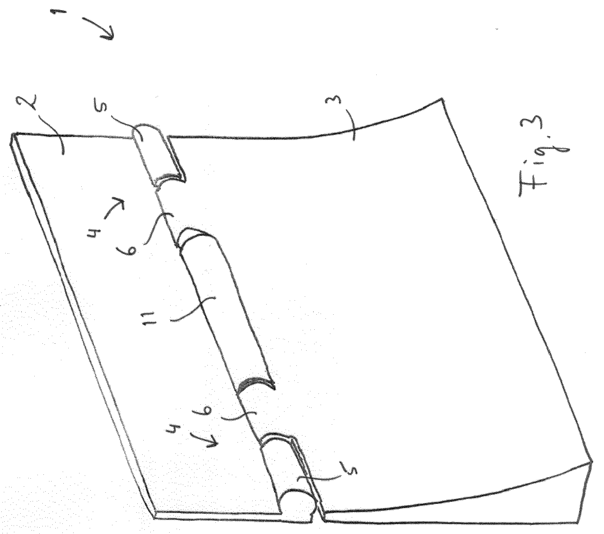

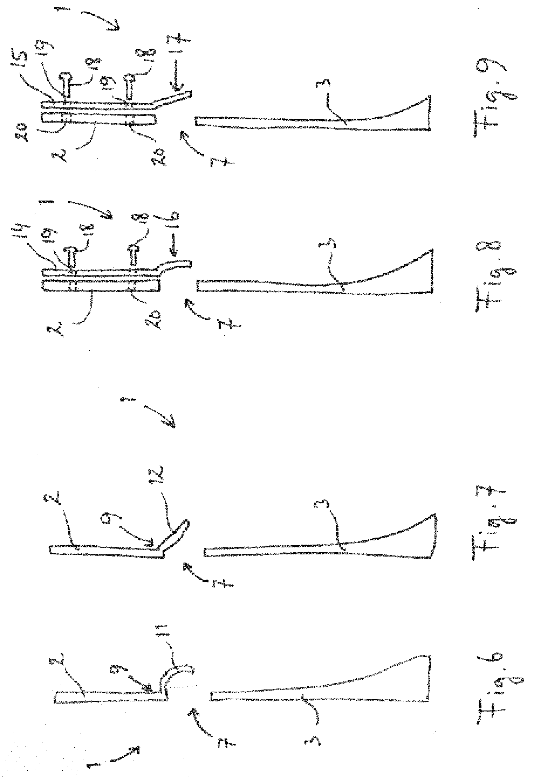

In Fig. 3 and 6 a first embodiment of a valve 1 according to the present invention is shown. The valve 1 comprises a connection plate 2 and a valve plate 3, as well as a hinge construction 4, comprised of mutually cooperating hinge parts 5, 6. In this embodiment a cover plate 11 is provided at a bottom side 9 of the connection plate 2. The cover plate 11 has a shape that substantially corresponds with the shape of the hinge connection 4, i.e. the hinge parts 5, 6. As a consequence, a smooth surface is obtained, with little chance of retaining debris.

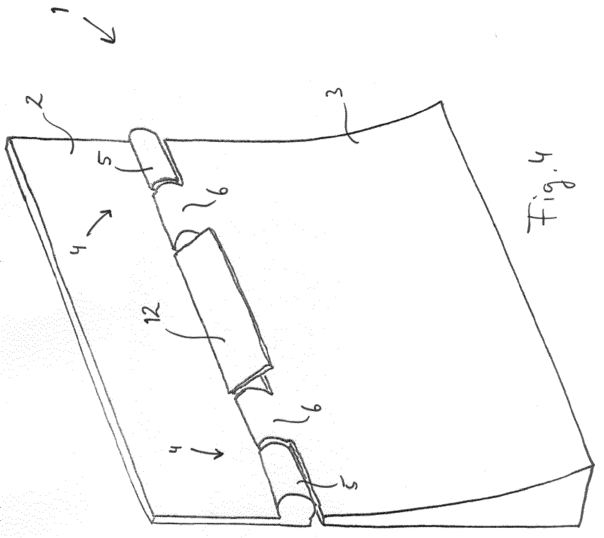

Fig. 4 and 7 show another embodiment of the valve 1 according to the invention. The cover plate 12 has a substantially flat shape that is sloping downwardly and covers the gap 7 between the hinge parts 5, 6. As a consequence, here also a smooth surface is obtained, with little chance of retaining debris.

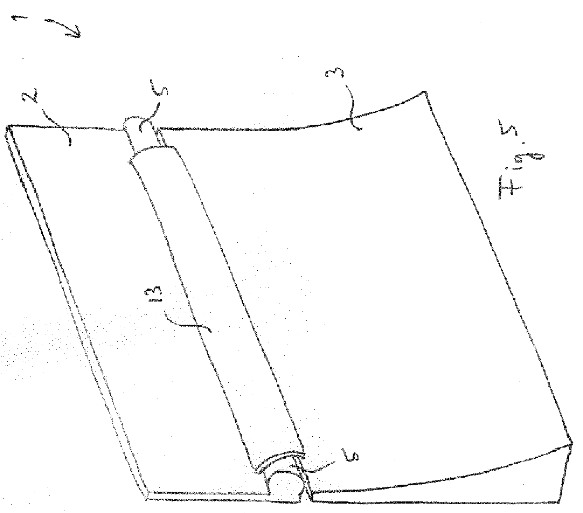

Fig. 5 shows another embodiment, wherein a cover plate 13 has a shape that is substantially coaxial with the tubular shape of the hinge connection 4, i.e. the hinge parts 5, 6. A substantially complete covering of the hinge connection 4 is provided by cover plate 13. In the embodiment shown in Fig. 5, the cover plate 13 does not extend over the complete width of the valve plate 3, but it may be extended so as to do cover the complete width thereof. As a consequence, a smooth surface is obtained, with absolutely no chance of retaining debris.

Fig. 8 and Fig. 9 show two alternative embodiments of the valve 1 according to the present invention. In the embodiment as shown in Fig. 8, a top plate 14 is positioned in front of the connection plate 2 so as to substantially cover said connection plate 2. The top plate 14 is provided with a rounded shaped covering strip 16 so as to cover gap 7. The width of top plate 14 may be such that at least the gap 7 is completely covered. The top plate 14 may be connected to the connection plate 2 by means of screws 18 that are received in holes 19, 20 in top plate 14 and connection plate 2, respectively.

Fig. 9 shows an alternative embodiment of the valve 1 with a connection plate 15. The main difference between top plate 15 and top plate 14 is the shape of top plate's 15 covering strip 17. Covering strip 17 is straightly shaped and extends over at least the width of gap 7, such that at least the gap 7 is completely covered. The top plate 15 may be connected to the connection plate 2 by means of screws 18 that are received in holes 19, 20 in top plate 15 and connection plate 2, respectively.

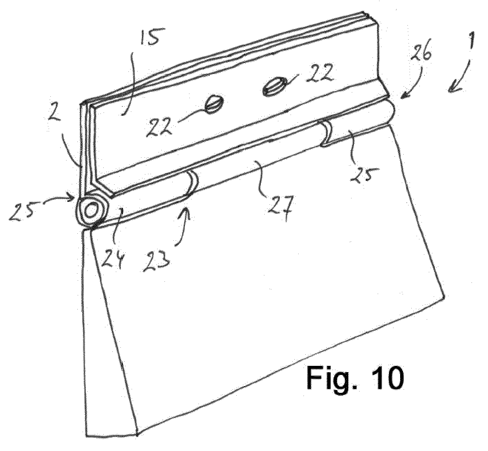

Fig. 10 finally shows a perspective view of the alternative embodiment of the invention in accordance with Fig. 9. The top plate 15 is placed against connection plate 2. However, as a matter of fact, bolts 22 are provided besides each other at substantially the same height. The hinge connection 23 is comprised of two parts 24 at each side 25, 26 of valve 1, coupled to the connection plate 15, whereas a central hinge portion 27 is coupled to the valve plate 3. The top plate 15 covers a gap between said central hinge portion 27 and connection plate 2.

In all embodiments, it is preferred that distal end 21 of cover plate 11, 12 or covering strip 16, 17 ends at such position that the valve plate 3 can be swiveled around a rotation axis embodied by axle 10 over about 180 degrees so as to reach a substantially vertical position, providing the parallel position as mentioned above with respect to the valve plate, wherein the entrance to a sewer pipe is kept free.

The invention is not limited to the embodiments as mentioned above and as shown in the drawings. The invention is limited by the claims only. For example, the cover plate 11, 12, 13 may extend along a smaller distance from the connection plate 2 than has been shown in the Figures.

The invention also relates to all combinations of features described here independently of each other.

## Claims

1. A valve with a valve plate for closing off an entrance to a sewer pipe in a storm drain, comprising a connection plate for positioning the valve against a storm drain's wall and a hinge connection for mutually coupling the said valve plate and the connection plate,
**characterized in that** the connection plate is provided with a protruding cover plate, said cover plate at least partially overlapping a gap between the valve plate and the connection plate.

2. A valve according to claim 1, wherein the cover plate has a partially annular shape, a cylinder axis of said partially annularly shaped cover plate being positioned substantially coaxial with a hinge axis of said hinge connecting the valve plate and the connection plate.

3. A valve according to claim 1 or 2, wherein a cylinder axis of said hinge connection is directed in an axial direction and wherein said valve has a width extending in said axial direction, said cover plate extending over substantially the complete width of said valve.

4. A valve according to claim 1, wherein said hinge connection is comprised of two separate hinge parts, each positioned near an end portion of the valve plate in a width direction thereof, and wherein said cover plate is positioned substantially in between said hinge parts.

5. A valve according to claim 1, said valve plate being rotatably coupled by means of said hinge connection to said connection plate, wherein said valve plate is positionable from a first position substantially as an extension of said connection plate to a second position substantially parallel with said cover plate.

6. A valve according to claim 1, wherein said valve plate, in the second position, substantially abuts said connection plate.

7. A storm drain comprising a valve according to any of claims 1-6, said storm drain comprising a wall with an entrance to a sewer pipe, said wall extending from a bottom side to a top side of said storm drain, said storm drain comprising a valve plate for closing off said entrance to the sewer pipe, said valve comprising a connection plate for positioning the valve against the storm drain's wall and a hinge connection for mutually coupling the said valve plate and the connection plate,
said storm drain being **characterized in that** the connection plate is provided with a protruding cover plate, said cover plate at least partially overlapping a gap between the valve plate and the connection plate.

8. A storm drain according to claim 7, said valve plate being rotatably coupled by means of said hinge connection to said connection plate, wherein:
- said valve plate is positionable from a first position substantially as an extension of said connection plate to a second position substantially parallel with said cover plate,
- wherein said valve plate as seen from the hinge part is directing towards the bottom side in said first position and to the top side in said second position.

9. A storm drain according to claim 8, wherein said valve plate is lockable in said second position by means of mutually cooperating locking elements provided on said valve plate and said connection plate.

10. A storm drain according to claim 8, wherein the valve plate abuts the cover plate in the second position.
